# EUROPEAN PATENT SPECIFICATION

(11) **EP 0 653 327 B1**
(45) Date of publication and mention of the grant of the patent: **25.07.2001**
(21) Application number: 94306718.1
(22) Date of filing: 14.09.1994
(51) Int. Cl.: B60Q 1/04

(54) **Modular lighting unit**
Modulare Beleuchtungseinheit
Unité d'éclairage modulaire

(30) Priority: 02.11.1993 US 145819
(43) Date of publication of application: 17.05.1995
(73) Proprietor: Kasboske, George C., Chicago, Illinois 60618 (US)
(72) Inventor: Kasboske, George C., Chicago, Illinois 60618 (US)
(74) Representative: Barnfather, Karl Jon, Dr.

(56) References cited:
- DE-A- 2 024 915
- US-A- 4 764 851
- US-A- 4 972 301

## Description

### Background of the Invention

### Field of the Invention

This invention relates to lighting equipment and, more particularly, to a modular lighting unit that is particularly suitable for use on on- and off-road vehicles to serve as at least one of a headlight, turn signal, tail light, running light, brake light, etc. on the vehicle.

### Background Art

It is known to place several different types of lights on on- and off-road vehicles. On the top of truck cabs, running lights and spot lights are commonly seen. This latter type of light is commonly mounted upon a bracket that spans laterally across the top of the vehicle cab. A plurality of lights are mounted in spaced relationship and project upwardly from the bracket. The individual lights, which may be relatively heavy, are held in place principally by a depending stem that acts as a pedestal. It is difficult with such a construction to maintain the lights in a stable position and in proper alignment. With these lights on off-road vehicles, vibrations and shock due to rough terrain often tend to work the lights loose from their mounting. Even if the lights do not work loose, there is a tendency of the lights to rattle as they flex about the pedestal-type mount.

In some constructions, if the light becomes misaligned, it must be removed to allow the mounting stem to be reshaped. The light must then be re-mounted.

A further problem with the above structure is that it is relatively limited with respect to the number and arrangement of lights on the bracket. Sufficient spacing must be left between adjacent lights so that the lights do not contact each other as when they flex with the vehicle in operation. At the same time, the lights must all be mounted at the same vertical height, as dictated by the mounting bracket.

Still further, most of the brackets and mounting structures for the lights are made from metal. Consequently, as these parts rust or corrode, it becomes more difficult, and at times impossible, to disassemble and adjust the lights.

Other lights mounted on vehicles, such as those used as headlights, running lights, tail lights, turn signal lights, running board lights, brake lights, etc., have the same problems as discussed above.

Because of the constraints introduced by conventional mounting systems, the cases for the above types of lights are usually made relatively simple in shape. That is, in most instances, the cases are square or rectangular. As a result, most of these conventional lights are usually unimaginative in terms of their appearance.

The inventor herein invented a system for mounting modular lighting units, which invention is the subject of US Patent No. 4, 972, 301. This prior art document discloses a lighting unit assembly comprising a plurality of lighting units each comprising a casing having a rectangular peripheral wall. The peripheral wall carries a plurality of ribs and slots for co-operating with like features on other lighting units thereby to enable construction of the assembly, but wherein in an assembled configuration, each of the lighting units only has substantially vertically or horizontally disposed peripheral walls. Certain configurations of such lighting units lead to relatively unstable assemblies.

### Summary of the Invention

The present invention aims to overcome the above-enumerated problems in a novel and simple manner. The invention provides a lighting unit assembly in accordance with independent claims 1 and 14. Preferred features of the invention are disclosed in the dependent claims and following description.

In one form, the exposed surface is substantially straight.

The attaching structure can take a number of different forms. In one form, the attaching structure includes a plurality of ribs and recesses. The lighting units can be permanently or removably attached.

The invention also contemplates the combination of the above structure with a mounting base to which the case can be connected.

The invention further contemplates the combination of the above structure with a guide rail to be attached to a support. The mounting base cooperates with the guide rail to allow the mounting base to be maintained in a plurality of different positions relative to the guide rail.

In one form, the support is one of an on- and off-road vehicle. The lighting unit can function as one of a headlight, a turn signal, a tail light, a running lights, a brake light, etc. on the vehicle.

To assist adjustment of the lighting unit, levelling structure can be provided for adjusting the attitude of the mounting base relative to a support for the mounting base.

The invention contemplates the combination of a first modular lighting unit with a second modular lighting unit, with the first and second modular lighting units being substantially the same. The second lighting unit has a second surface portion that can be attached to the first surface portion on the first unit. In one form, the first and second surface portions are each flat and angled so that with the first and second surface portions abutted to each other, the first and second lighting units have the same orientation.

While the peripheral wall surface of the lighting units can take a number of different shapes, in one desirable form, the peripheral wall surface has a diamond shape.

A third modular lighting unit, similar to the first and second lighting units, can be provided. The first lighting unit can be constructed to be attached to the third lighting unit.

In one form, only two of the three modular lighting units are connected to a support therefor, with the other module being supported by the support-engaging modules. The third module can be supported in cantilever fashion from one or both of the other two modules.

A fourth lighting unit can be provided for connection to each of the second and third modular lighting units.

With the inventive structure, a tremendous amount of versatility is afforded. The individual modules can be stacked and interlocked to provide a highly stable system with an infinite number of different overall shapes and designs being possible.

A light source can be provided as part of the modular lighting unit.

In another form of the invention, a modular lighting unit is provided having a case and a light source mounted to the case. The case has a peripheral wall defined at least partially by an exposed surface having a first portion that is other than a flat surface extending fully horizontally or fully vertically, with structure on the exposed surface portion being provided for attaching another modular lighting unit to the case.

### Detailed Description of the Drawings

Fig. 1 is a perspective view of a modular lighting unit according to the present invention assembled to a mounting base;
Fig. 2 is an exploded perspective view of the modular lighting unit and mounting base;
Fig. 3 is a perspective view of the modular lighting unit on the mounting base situated for engagement with a guide rail to which the lighting unit can be attached in a plurality of different positions;
Fig. 4 is a front elevation view of the modular lighting unit assembled to the mounting base;
Fig. 5 is a side elevation view of the modular lighting unit;
Fig. 6 is a front elevation view of four modular lighting units assembled in one configuration around a single mounting base;
Fig. 7 is a front elevation view showing nine modular lighting units connected together in another configuration on a plurality of mounting bases;
Fig. 8 is an enlarged, fragmentary, front elevation view of the connection between two of the modular lighting units;
Fig. 9 is a perspective view of one type of vehicle with modular lighting units according to the present invention mounted thereon;
Fig. 10 is a view as in Fig. 9 with the modular lighting units mounted on the vehicle in a different configuration;
Fig. 11 is a rear elevation view of a semi-truck/trailer with modular lighting units thereon; and
Fig. 12 is an enlarged, fragmentary, front elevation view of a plurality of ribs and recesses on joined modular lighting units.

### Detailed Description of the Drawings

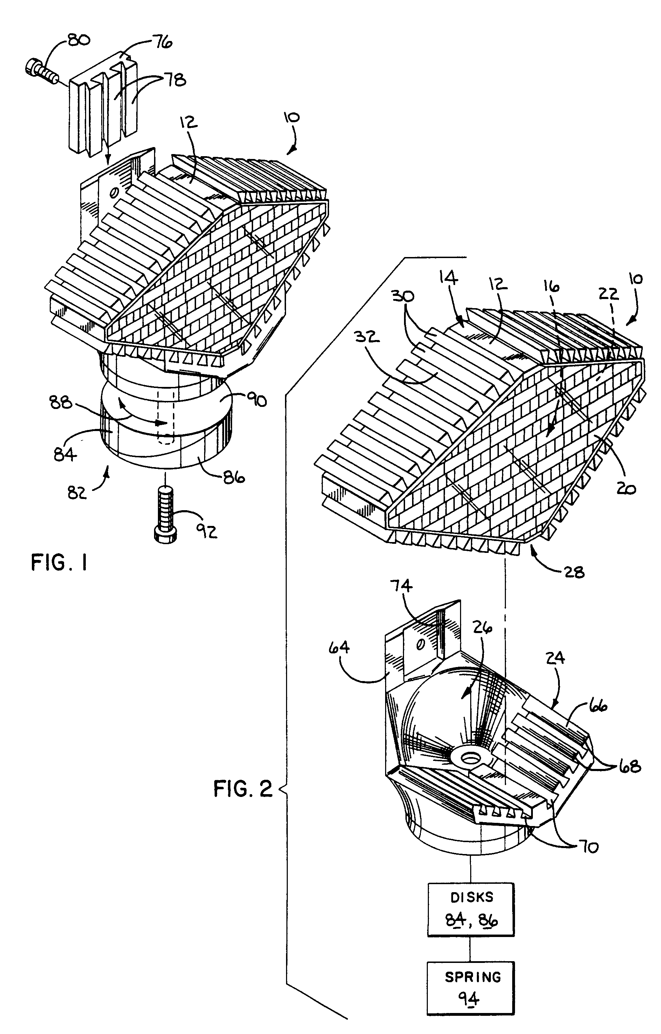

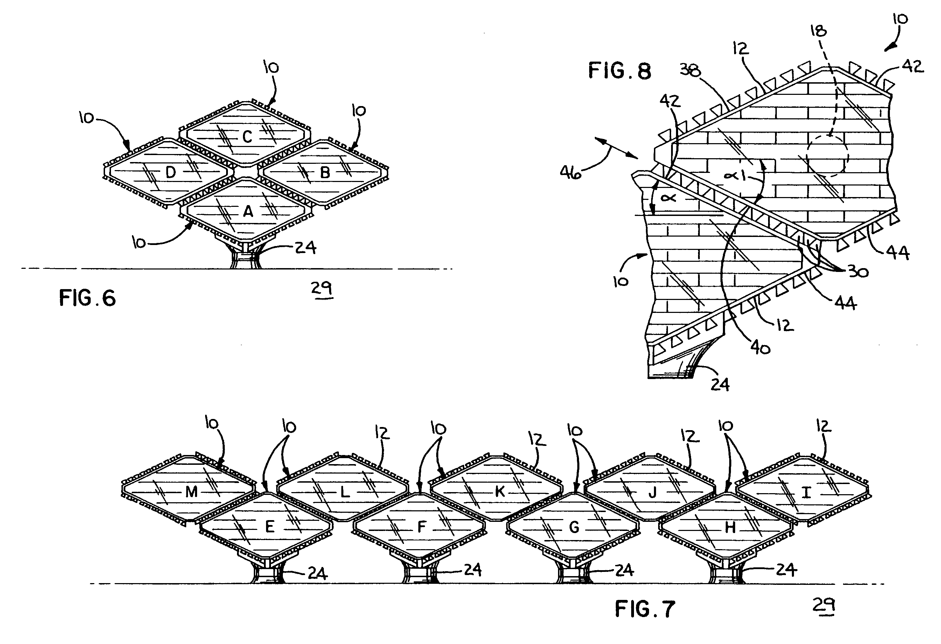

In Figs. 1-12, a modular lighting unit, according to the present invention, is shown at 10. The lighting unit 10 has a case 12 with a peripheral wall 14 extending around a light chamber 16 within which a light source 18 (Fig. 8) resides. Light from the source 18 projects forwardly through a striped lens 20 at the forward portion of the case 12. A suitable construction for the lens 20 is described in my U.S. Patent No. 4,586,116. However, it is not necessary that the lens 20 be other than clear or translucent. In fact, the lens 20 could be altogether eliminated.

Light projecting rearwardly from the light source 18 is redirected forwardly by a reflector 22 at the rear of the case 12. The reflector 22 is likewise optional.

A mounting base 24 defines a cradle at 26 for the bottom 28 of the module 10. The mounting base 24 provides a pedestal/foundation for the module 10 upon a support 30, as shown generically at 30 in Fig. 7.

The case 12 has peripherally spaced, elongate ribs 30 extending in a fore and aft direction, with there being recesses 32 defined between adjacent ribs 30. Each rib 30 has oppositely facing side surfaces 34, 36 which diverge away from the case 12. The recesses 32 have a complementary shape to accept a rib on a like module 10. The ribs 30 and recesses 32 are spaced equidistantly so as to mesh with ribs 30 and recesses 32 on an adjoining, like module 10 in a plurality of different relative positions.

The wall 14 on each case 12 has four flat surface portions 38, 40, 42 and 44 which can be flushly abutted to any of the flat surfaces 38, 40, 42, 44 on a like module 10 to be joined thereto. In one preferred form, the surfaces 38, 40, 42, 44 cooperatively define a diamond shape.

While the peripheral wall 14 could have other shapes, it is desirable that at least one of the flat surfaces 38, 40, 42, 44 extends other than fully vertically or horizontally to facilitate connection to another module 10. As seen most clearly in Fig. 8, the angle α of the surface 42 on the lower module 10 is chosen to be equal to the angle α1 of the surface 40 on the superjacent module 10 so that with the modules 10 stacked as shown in Fig. 8, the two modules 10 have the same orientation, i.e with one upright, the other module attached thereto is upright. As a result, the upper module 10 is held in cantilever fashion from the wall surface 42 on the lower module 10 through the meshing ribs 30. Since the ribs 30 are spaced equidistantly along the surfaces 40, 42, the two modules 10 can be connected in a plurality of different positions along the line of the double-headed arrow 46.

The arrangement of the ribs 30 and recesses 32 is such that the modules 10 that are to be joined can be relatively positioned, one in front of the other, and moved towards and against each other in a fore and aft direction to mesh the ribs 30. Once the ribs 30 on adjacent modules 10 are in mesh, a screw or other type of wedge 48 (Fig. 12) can be directed into a bore 50 extending lengthwise into or through one of the ribs 30 to progressively effect a lateral expansion thereof, as indicated by the bowed side surface 34 shown in phantom lines in Fig. 12. This effectively locks adjacent ribs 30 on the joined modules 10 to prevent inadvertent separation of the joined modules 10.

With the above described structure, the modules 10 can be rigidly meshed in clusters in a variety of different attractive and functional shapes. In Fig. 6, four modules, designated A, B, C and D, are shown assembled together to define a larger diamond shape. The module A is carried on a mounting base 24 and connected to modules B and D. The uppermost module C is connected to both the modules B and D. This structure affords a self-rigidifying arrangement by reason of the interlocking of the modules A, B, C and D. Additional modules can be stacked upon the modules B, C, D and each other to construct a further desired shape.

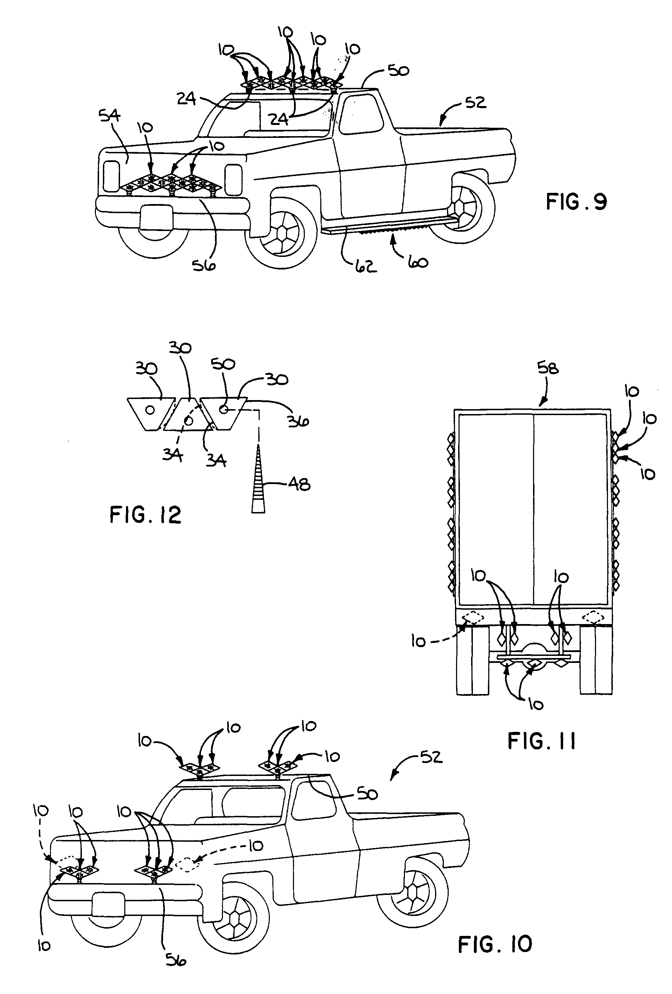

In Fig. 7, nine modules are shown, lettered E-M, arranged in a different configuration. The lowermost modules E, F, G and H are each received in a mounting base 24 which mounting bases 24 are fixed to an underlying support 30. The end modules M, I are each supported in cantilever fashion from a single module E, H, respectively. The other modules L, K, J are each connected to two modules. This interlocking arrangement permits a reinforced, sturdy assembly of modules 10 across a substantial width, as upon the cab 50 of a pickup truck 52, shown in Fig. 9. The support 30 can be the vehicle 52 itself or a bracket which is attached to the vehicle 52. In Fig. 9, the mounting bases 24 are attached directly to the vehicle 52.

A similar arrangement of modules 10 is shown in front of the grill 54 on the front of the vehicle 52 on the bumper 56. The modules 10 are stacked one layer higher than the arrangement shown in Fig. 7.

In Fig. 10, individual clusters of three are shown mounted upon the cab 50 and bumper 56 on the vehicle 52.

The joined modules 10 can be downsized and used as running lights, as on a semi-truck/trailer, shown at 58 in Fig. 11. In Fig. 11, the single modules 10 are shown to be used as brake and turn signal lights for the semi-truck/trailer 58.

A further downsized version of the module 10 is shown at 60 in Fig. 9 along the edge of a running board 62 on the vehicle 52.

The modules 10 can be simply joined like building blocks to produce an overall desired size and shape. The angular arrangement of the surfaces 38, 40, 42, 44 facilitates stacking, provides a rigid cantilevered support between adjacent modules 10, provides a rigid connection between two joined modules, and allows unique shapes to be created at the point of use by a consumer.

Further, the consumer can disassemble and re-assemble the modules 10 in a desired shape.

The ribbed arrangement of the case 12 also facilitates connection of the case 12 to the mounting base 24. The mounting base 24 is generally L-shaped with a vertically extending wall 64 and a horizontally extending wall 66. The wall 66 has ribs 68 and recesses 70 corresponding to the ribs 30 and recesses 32 in terms of size and spacing. The horizontal wall 66 has a V shape corresponding to the bottom wall of the case 12. The module 10 can thus be press fit from front to rear into operative engagement with the mounting base 24. In that operative position, the rear wall 72 of the case resides in close proximity to the vertically extending wall 64 on the mounting base 24.

The mounting base 24 has an undercut 74 to accept a mounting plate 76 having ribs 78 which can be slid vertically into mesh with ribs (not shown) on the rear wall 72 of the case 12. A fastener, in the form of a screw 80, can be directed through the wall 64, the plate 76 and into the case rear wall 82 to prevent separation of the module 10 from the mounting base 24. Disassembly of the module 10 from the mounting base 24 can be accomplished by reversing the above steps.

A further aspect of the invention is the provision of a levelling means at 82 by which the attitude of the combined module 10 and mounting base 24 can be altered relative to the support 30 on which they are carried. A pair of sloped disks 84, 86 are placed in overlying relationship. In one relative position, the disks 84, 86 cooperatively define a uniform thickness. By relatively rotating the disks, as indicated by the arrow 88, the thickened and thin portions of the disk 84, 86 reside in different relationships, thereby causing the upper surface 90 of the disk 84, which bears on the mounting base 24, to vary in attitude. A mounting bolt 92 can be directed through the disks 84, 86 and into the mounting base 24 to fix the relative positions thereof.

An optional spring 94 can be used to biasably capture the disks 84, 86 against the mounting base 24 so that the relative positions of the disks 84, 86 and mounting base 24 are frictionally maintained before the bolt 92 is tightened to positively fix this relationship.

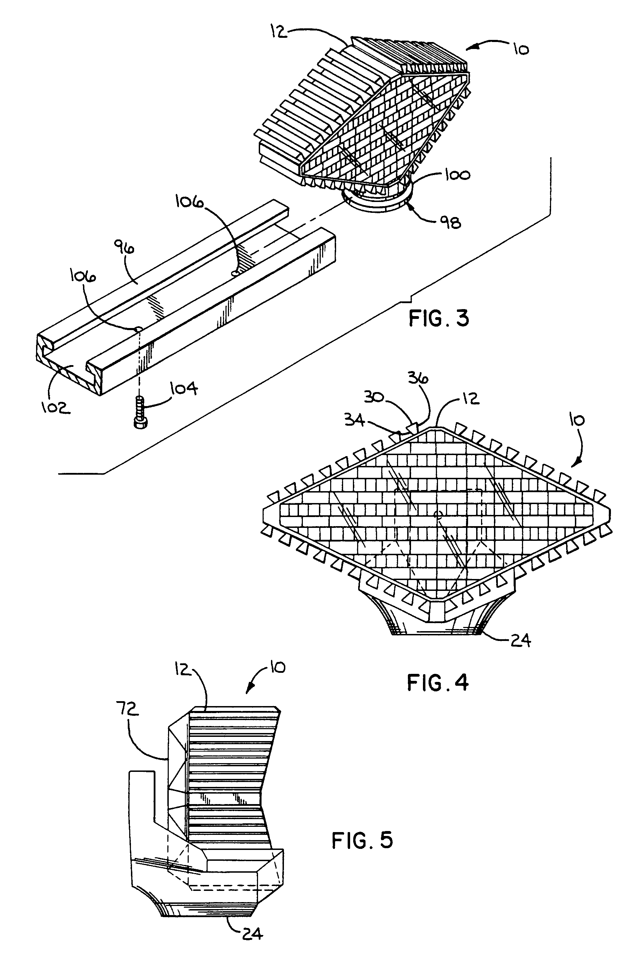

Another aspect of the invention is the provision of a mounting/guide rail 96 to accept a modified form of mounting base, as shown in Fig. 3 at 98. The mounting base 98 has an enlarged disk 100 which fits in a slot 102 on the rail 96 to allow the disk 100, and module 10 associated therewith, to be slid along the rail 96. A bolt 104 can be directed through any of a number of bores 106 in the rail 96 to extend into the mounting base 98 to fix the position of the mounting base 98 relative to the rail 96 as desired.

The foregoing disclosure of specific embodiments is intended to be illustrative of the broad concepts comprehended by the invention.

## Claims

1. A lighting unit assembly comprising:
a plurality of modular lighting units (10) including a first and a second modular lighting unit each having:
a case (12) having a front and back and a peripheral wall (14) extending around a light chamber (16);
a reflector (22) in said light chamber for directing light from a source forwardly from said case (28);
first means for mounting at least one of the first and second lighting units to a mounting base (24) in a first position such that with the at least one of the first and second lighting units in the first position a fore-and-aft line associated with the at least one of the first and second lighting units is horizontally oriented,
wherein the peripheral wall (14) on the at least one of the first and second lighting units is defined at least partially by an exposed surface (38,40,42,44) and with the at least one of the first and second lighting units in the first position the exposed surface thereof has a portion that is other than a flat surface extending either fully horizontally or fully vertically; and
means (30,32) on the exposed surface portion of the at least one of the first and second lighting units and on the other of the first and second modular lighting units for attaching the first and the second modular lighting units to each other,
at least part of the portion of the exposed surface (38,40,42,44) of the at least one of the first and second lighting units facing upwardly, there being a substantial portion of the other of the first and second lighting units that vertically overlies and bears against the at least part of the portion of the exposed surface of the at least one of the first and second lighting units, there being another portion (38,40,42,44) of the other of the first and second lighting units that project horizontally in cantilever fashion from the at least one of the first and second lighting units.

2. The lighting unit assembly according to claim 1 wherein the exposed surface portion (38,40,42,44) is substantially straight.

3. The lighting unit assembly according to claim 1 or 2 wherein the attaching means (30,32) comprises a plurality of intermeshing ribs (30) and recesses (32) on the first and second modular lighting units.

4. The lighting unit assembly according to any preceding claim in combination with a mounting base (24), there further being means (30,32,68,70) for removably connecting the at least one of the first and second modular lighting units to the mounting base.

5. The lighting unit assembly according to claim 4 in combination with a guide rail (96) to be attached to a support, there being means (100,102) cooperating between the mounting base (24) and guide rail to allow the mounting base to be maintained in a plurality of different positions relative to the guide rail.

6. The lighting unit assembly according to claim 5 in combination with a support for the guide rail, said support comprising one of an on- and off-road vehicle.

7. The lighting unit assembly according to claim 4 wherein the mounting base includes means (106) for attaching the mounting base to a support and further including levelling means (82) for adjusting the attitude of the mounting base relative to a support for the mounting base.

8. The lighting unit assembly according to any preceding claim wherein the exposed surface of the peripheral wall (14) defines a diamond shape.

9. The lighting unit assembly according to any preceding claim wherein the first and second lighting units (10) have substantially the same shape, the peripheral wall (14) of both of the first and second lighting units is defined at least partially by an exposed surface portion that is flat and angled relative to horizontal with the at least one of the first and second lighting units in the first position and the other of the first and second lighting units attached to the one of the first and second lighting units and the at least one of the first and second lighting units has a first orientation so that with the surface portions of the first and second lighting units abutted to each other the other of the first and second lighting units is arranged in a second orientation substantially the same as the first orientation.

10. The lighting unit assembly according to any preceding claim wherein the attaching means comprises means for removably attaching the at least one of the first and second modular lighting units to the case of the first and second modular lighting units.

11. The lighting unit assembly according to any preceding claim in combination with a light source and means for mounting the light source to the case.

12. The lighting unit assembly according to any preceding claim wherein the reflector has a diamond shape.

13. The lighting assembly according to any preceding claim wherein said peripheral wall (14) of the at least one modular lighting unit defines a shape as viewed from the front of the at least one modular lighting unit that is other than one of a rectangle and square with at least one of the first and second lighting units in the first position.

14. A lighting unit assembly comprising:
a plurality of modular lighting units (10) including a first and a second modular lighting unit each having:
a case (12) having a front and back and a peripheral wall (14) extending around a light chamber (16):
a reflector (22) in said light chamber for directing light from a source forwardly from said case;
first means for mounting at least one of the first and second lighting units to a mounting base (24) in a first position such that with the at least one of the first and second lighting units in the first position a fore-and-aft line associated with the at least one of the first and second lighting units is horizontally oriented,
wherein the peripheral wall (14) on the at least one of the first and second lighting units is defined at least partially by an exposed surface (38,40,42,44) and with at least one of the first and second lighting units in the first position the exposed surface thereof has a portion that is other than a flat surface extending either fully horizontally or fully vertically; and means on the exposed surface portion of the at least one of the first and second lighting units and on the other first and second modular lighting units for attaching the first and second modular lighting units to each other,
wherein there are second means (30,32) on the exposed surface of the at least one of the first and second modular lighting units for attaching a third one of the plurality of modular lighting units to the at least one of the first and second modular lighting units, there further being means other than the at least one of the first and second modular lighting units for attaching the third modular lighting unit to the other of the first and second modular lighting units.

15. The modular lighting unit according to claim 14 wherein at least one of a) the means for attaching the exposed surface portion of the first modular lighting unit to the second modular lighting unit and b) the second attaching means comprises a plurality of cooperating ribs and recesses.

16. The modular lighting unit according to claim 14 including means for attaching only two of the three modular lighting units to a support therefor.

17. The lighting unit assembly according to claim 14 including a fourth modular lighting unit and means on the fourth modular lighting unit for attaching the fourth modular lighting unit to at least two of the other modular lighting units.

## Patentansprüche

1. Beleuchtungskörper-Aufbau, der eine Vielzahl von modularen Beleuchtungskörpern (10) mit einem ersten und einem zweiten modularen Beleuchtungskörper umfaßt, wobei jeder aufweist:
ein Gehäuse (12) mit einer Voder- und einer Rückwand sowie eine Umfangswand (14), die sich rund um eine Leuchtkammer (16) erstreckt;
einen Reflektor (22) in der Leuchtkammer, um Licht von einer Lichtquelle nach vorne aus dem Gehäuse (28) zu leiten;
erste Mittel zur Montage mindestens eines der ersten und zweiten Beleuchtungskörper an einer Befestigungsplatte (24) in einer ersten Position derart, daß mit dem mindestens einen der ersten und zweiten Beleuchtungskörper in der ersten Position eine Längsachse, verbunden mit dem mindestens ersten und zweiten Beleuchtungskörper, horizontal ausgerichtet ist;
bei dem die Umfangswand (14) an dem mindestens einen der ersten und zweiten Beleuchtungskörper in mindestens einem Bereich durch eine freistehende Fläche (38, 40, 42, 44) ausgeprägt ist, wobei an dem mindestens einen der ersten und zweiten Beleuchtungskörper in der ersten Position die freistehende Fläche einen Bereich darauf aufweist, der anders als eine ebene Fläche, die sich entweder vollständig horizontal oder vollständig vertikal erstreckt, ausgebildet ist und;
Mittel (30, 32) im Bereich der freistehenden Fläche wenigstens eines der ersten und zweiten Beleuchtungskörper sowie auf dem anderen der ersten und zweiten modularen Beleuchtungskörper, um den ersten und den zweiten modularen Beleuchtungskörper aneinanderzufügen,
mindestens einen Abschnitt des Bereiches der freistehenden Fläche (38, 40, 42, 44) des mindestens einen der ersten und zweiten aufwärtsgerichteten Beleuchtungskörper, wobei ein beträchtlicher Bereich des anderen der ersten und zweiten Beleuchtungskörper vorhanden ist, der vertikal überlappt und sich gegen den mindestens einen Abschnitt des Bereiches der freistehenden Fläche des mindestens einen der ersten und zweiten Beleuchtungskörper abstützt und wobei ein anderer Bereich (38, 40, 42, 44) an dem anderen des ersten und zweiten Beleuchtungskörpers vorhanden ist, der horizontal freitragend von dem mindestens einen der ersten und zweiten Beleuchtungskörper vorsteht.

2. Beleuchtungskörper-Aufbau nach Anspruch 1, bei dem der Bereich der freistehenden Fläche (38, 40, 42, 44) im wesentlichen gerade ist.

3. Beleuchtungskörper-Aufbau nach Anspruch 1 oder 2, bei dem die Verbindungsmittel (30, 32) eine Vielzahl von ineinander greifenden Rippen (30) und Vertiefungen (32) an den ersten und zweiten modularen Beleuchtungskörpern umfassen.

4. Beleuchtungskörper-Aufbau gemäß einem der vorigen Ansprüche in Kombination mit einer Befestigungsplatte (24) und weiteren vorhandenen Mitteln (30, 32, 68, 70) für eine abnehmbare Verbindung des mindestens einen der ersten und zweiten modularen Beleuchtungskörper an der Befestigungsplatte.

5. Beleuchtungskörper-Aufbau gemäß Anspruch 4 in Kombination mit einer Führungsschiene (96), die an eine Abstützung anzubringen ist, wobei Mittel (100, 102) vorgesehen sind, die zwischen der Befestigungsplatte (24) und der Führungsschiene zusammenwirken, um es der Befestigungsplatte zu ermöglichen, in einer Vielzahl von unterschiedlichen Positionen relativ zu der Führungsschiene gehalten zu werden.

6. Beleuchtungskörper-Aufbau gemäß Anspruch 5 in Kombination, mit einer Abstützung der Führungsschiene, wobei die Abstützung eine Ausführung für ein Straßenfahrzeug und eine Ausführung für ein Geländefahrzeug umfaßt.

7. Beleuchtungskörper-Aufbau gemäß Anspruch 4, wobei die Befestigungsplatte Mittel (106) zur Anbringung der Befestigungsplatte an eine Abstützung und weitere Nivellier-Mittel (82) zur Einstellung der Stellung der Befestigungsplatte relativ zu einer Abstützung der Befestigungsplatte umfasst.

8. Beleuchtungskörper-Aufbau nach eiem der vorausgehenden Ansprüche, wobei die freistehende Fläche der Umfangswand (14) eine Diamant-Form aufweist.

9. Beleuchtungskörper-Aufbau nach einem der vorausgehenden Ansprüche, wobei der erste und zweite Beleuchtungskörper (10) eine im wesentlichen gleiche Form aufweisen und die Umfangswand (14) sowohl des ersten als auch des zweiten Beleuchtungskörpers durch einen mindestens teilweise freistehenden Flächenbereich ausgeprägt ist, die eben und angewinkelt bezüglich der Horizontalen mit dem mindestens einen der ersten und zweiten Beleuchtungskörper in der ersten Position ausgebildet ist, wobei der andere der ersten und zweiten Beleuchtungskörper, der an einem der ersten und zweiten Beleuchtungskörper angebracht ist, und der mindestens eine der ersten und zweiten Beleuchtungskörper eine erste Ausrichtung aufweist, so daß mit den Bereichen der Fläche der ersten und zweiten Beleuchtungskörper, die aneinander gefügt sind, der andere der ersten und zweiten Beleuchtungsköper in einer zweiten Ausrichtung eingebaut ist, die im wesentlichen mit der ersten Ausrichtung übereinstimmt.

10. Beleuchtungskörper-Aufbau nach einem der vorausgehenden Ansprüche, wobei die Befestigungsmittel Mittel zur entfernbaren Anbringung des mindestens einen der ersten und zweiten modularen Beleuchtungskörper an das Gehäuse der ersten und zweiten modularen Beleuchtungskörper umfassen.

11. Beleuchtungskörper-Aufbau nach einem der vorausgehenden Ansprüche in Kombination mit einer Lichtquelle und Mitteln zur Montage der Lichtquelle an das Gehäuse.

12. Beleuchtungskörper-Aufbau nach einem der vorausgehenden Ansprüche, wobei der Reflektor eine Diamant-Form aufweist.

13. Beleuchtungskörper-Aufbau nach einem der vorausgehenden Ansprüche, wobei die Umfangswand (14) des mindesten einen modularen Beleuchtungskörpers eine Form aus Sicht von vorne des mindestens einen Beleuchtungskörpers definiert, die anders als ein Rechteck und Quadrat zu dem mindestens einen der ersten und zweiten Beleuchtugnskörper in der ersten Position ausgebildet ist.

14. Beleuchtungskörper-Aufbau, der eine Vielzahl von modularen Beleuchtungskörpern (10) mit einem ersten und einem zweiten modularen Beleuchtungskörper umfaßt, wobei jeder aufweist:
Ein Gehäuse (12) mit einer Vorder- und einer Rückwand sowie eine Umfangswand (14), die sich rund um eine Leuchtkammer (16) erstreckt;
einen Reflektor (22) in der Leuchtkammer, um Licht von einer Lichtquelle nach vorne aus dem Gehäuse (28) zu leiten;
erste Mittel zur Montage mindestens eines der ersten und zweiten Beleuchtungskörper an eine Befestigungsplatte (24) in einer ersten Position derart, daß mit dem mindestens einen der ersten und zweiten Beleuchtungskörper in der ersten Position eine Längsachse, verbunden mit dem mindestens ersten und zweiten Beleuchtungskörper, horizontal ausgerichtet ist,
bei dem die Umfangswand (14) an dem mindestens einen der ersten und zweiten Beleuchtungskörper in mindestens einem Bereich durch eine freistehende Fläche (38, 40, 42, 44) ausgeprägt ist, wobei an dem mindestens einen der ersten und zweiten Beleuchtungskörper in der ersten Position die freistehende Fläche einen Bereich darauf aufweist, der anders als eine ebene Fläche, die sich entweder vollständig horizontal oder vollständig vertikal erstreckt, ausgebildet ist;
und Mittel im Bereich der freistehenden Fläche auf mindestens einem der ersten und zweiten Beleuchtungskörper und auf dem anderen der ersten und zweiten modularen Beleuchtungskörper, um den ersten und den zweiten modularen Beleuchtungskörper aneinanderzufügen,
bei dem zweite Mittel (30, 32) auf der freistehenden Fläche des mindestens einen der ersten und zweiten modularen Beleuchtungskörper zur Anbringung eines dritten einer Vielzahl von Beleuchtungskörpern an dem mindestens einen der ersten und zweiten modularen Beleuchtungskörper angeordnet und weitere Mittel vorhanden sind, die anders als der mindestens eine der ersten und zweiten Beleuchtugskörper zur Anbringung des dritten modularen Beleuchtungskörpers an den anderen der ersten und zweiten Beleuchtungskörper sind.

15. Modularer Beleuchtungskörper nach Anspruch 14, bei dem mindestens einer
a) die Mittel zur Anbringung des freistehenden Flächenbereichs des ersten modularen Beleuchtungskörpers an den zweiten modularen Beleuchtungskörper und
b) das zweite Mittel zur Anbringung eine Vielzahl von ineinander greifenden Rippen und Vertiefungen
umfaßt.

16. Modularer Beleuchtungskörper nach Anspruch 14, mit Mitteln zur Anbringung von nur zwei der drei modularen Beleuchtungskörper an einen Träger hierfür.

17. Beleuchtungskörper-Aufbau nach Anspruch 14 mit einem vierten Beleuchtungskörper und Mitteln an dem vierten modularen Beleuchtungskörper zur Anbringung des vierten modularen Beleuchtungskörpers an mindestens zwei der anderen modularen Beleuchtungskörper.

## Revendications

1. Ensemble d'unités d'éclairage, comprenant :
un certain nombre d'unités d'éclairage modulaires (10) comprenant une première unité d'éclairage modulaire et une seconde unité d'éclairage modulaire comportant chacune :
• un boîtier (12) muni d'une partie avant, d'une parie arrière et d'une paroi périphérique (14) s'étendant autour d'une chambre à lumière (16) ;
• un réflecteur (22) placé dans cette chambre à lumière pour diriger la lumière provenant d'une source, vers l'avant (28) du boîtier ;
• un premier moyen pour monter l'une au moins des première et seconde unités d'éclairage sur une base de montage (24) dans une première position telle que, lorsque celle au moins de la première et seconde unité d'éclairage se trouve dans la première position, une ligne avant-arrière associée à celle-ci soit orientée horizontalement,
dans lequel
• la paroi périphérique (14) de celle au moins des première et seconde unités d'éclairage est définie au moins partiellement par une surface exposée (38, 40, 42, 44) et, lorsque celle au moins des première et seconde unités d'éclairage se trouve dans la première position, la surface exposée de celle-ci comporte une partie autre qu'une surface plate s'étendant soit complètement horizontalement soit complètement verticalement ; et
• des moyens (30, 32) sont situés sur la partie de surface exposée de celle au moins des première et seconde unités d'éclairage, et sur l'autre des première et seconde unités d'éclairage modulaires, pour fixer la première et la seconde unité d'éclairage modulaires l'une à l'autre,
• une partie au moins de la portion de surface exposée (38, 40, 42, 44) de celle au moins des première et seconde unités d'éclairage, est tournée vers le haut, tandis qu'une partie importante de l'autre des première et seconde unités d'éclairage recouvre verticalement et s'appuie contre cette partie au moins de la portion de surface exposée de celle au moins des première et seconde unités d'éclairage, et qu'une autre partie (38, 40, 42, 44) de l'autre des première et seconde unités d'éclairage, fait saillie horizontalement en porte-à-faux par rapport à celle au moins des première et seconde unités d'éclairage.

2. Ensemble d'unités d'éclairage selon la revendication 1, dans lequel
la partie de surface exposée (38, 40, 42, 44) est essentiellement droite.

3. Ensemble d'unités d'éclairage selon la revendication 1 ou 2,
dans lequel
les moyens de fixation (30, 32) comprennent un certain nombre de nervures (30) et d'évidements (32) qui s'emboîtent sur la première et la seconde unité d'éclairage modulaires.

4. Ensemble d'unités d'éclairage selon l'une quelconque des revendications précédentes, en combinaison avec une base de montage (24),
comprenant en outre
des moyens (30, 32, 68, 70) pour relier de manière amovible celle au moins des première et seconde unités d'éclairage modulaires, à la base de montage.

5. Ensemble d'unités d'éclairage selon la revendication 4, en combinaison avec un rail de guidage (96) devant être fixé à un support,
comprenant
des moyens (100, 102) coopérant entre la base de montage (24) et le rail de guidage pour permettre à la base de montage d'être maintenue dans un certain nombre de positions différentes par rapport au rail de guidage.

6. Ensemble d'unités d'éclairage selon la revendication 5, en combinaison avec un support pour le rail de guidage,
dans lequel
le support comprend l'un quelconque d'un véhicule routier et d'un véhicule tous terrains.

7. Ensemble d'unités d'éclairage selon la revendication 4,
dans lequel,
la base de montage comprend un moyen (106) pour fixer cette base de montage à un support, et comprend en outre un moyen de mise à niveau (82) pour régler la position de la base de montage par rapport à un support de celle-ci.

8. Ensemble d'unités d'éclairage selon l'une quelconque des revendications précédentes,
dans lequel,
la surface exposée de la paroi périphérique (14) définit une forme de losange.

9. Ensemble d'unités d'éclairage selon l'une quelconque des revendications précédentes,
dans lequel,
• la première et la seconde unité d'éclairage (10) ont essentiellement la même forme,
• la paroi périphérique (14) de l'une et l'autre de la première et la seconde unité d'éclairage est définie au moins partiellement par une partie de surface exposée qui est plate et inclinée d'un certain angle par rapport à l'horizontale,
• celle au moins des première et seconde unités d'éclairage se trouve dans la première position tandis que l'autre des première et seconde unités d'éclairage est attachée à celle des première et seconde unités d'éclairage, et
• celle au moins des première et seconde unités d'éclairage présente une première orientation de façon que, lorsque les parties de surface de la première et seconde unité d'éclairage viennent buter l'une contre l'autre, l'autre des première et seconde unités d'éclairage soit disposée dans une seconde orientation essentiellement identique à la première orientation.

10. Ensemble d'unités d'éclairage selon l'une quelconque des revendications précédentes,
dans lequel,
le moyen de fixation comprend un moyen pour fixer de manière amovible celle au moins des première et seconde unités d'éclairage modulaires, au boîtier des première et seconde unités d'éclairage modulaires.

11. Ensemble d'unités d'éclairage selon l'une quelconque des revendications précédentes, en combinaison avec une source de lumière,
comprenant en outre,
un moyen pour monter la source de lumière sur le boîtier.

12. Ensemble d'unités d'éclairage selon l'une quelconque des revendications précédentes,
dans lequel,
le réflecteur a une forme de losange.

13. Ensemble d'éclairage selon l'une quelconque des revendications précédentes,
dans lequel,
la paroi périphérique (14) de l'une au moins des unités d'éclairage modulaires définit, en vue de face d'au moins cette unité d'éclairage modulaire, une forme différente de celle d'un rectangle et d'un carré, lorsque l'une au moins des première et seconde unités d'éclairage se trouve dans la première position.

14. Ensemble d'unités d'éclairage comprenant :
un certain nombre d'unités d'éclairage modulaires (10) comprenant une première unité d'éclairage modulaire et une seconde unité d'éclairage modulaire comportant chacune :
• un boîtier (12) muni d'une partie avant, d'une partie arrière et d'une paroi périphérique (14) s'étendant autour d'une chambre à lumière (16) ;
• un réflecteur (22) placé dans la chambre à lumière pour diriger la lumière provenant d'une source, vers l'avant du boîtier ;
• un premier moyen pour monter l'une au moins des première et seconde unités d'éclairage sur une base de montage (24) dans une première position telle que, lorsque celle au moins des première et seconde unités d'éclairage se trouve dans la première position, une ligne avant-arrière associée à celle au moins des première et seconde unités d'éclairage soit orientée horizontalement,
dans lequel
• la paroi périphérique (14) sur l'une au moins des première et seconde unités d'éclairage est définie, au moins partiellement, par une surface exposée (38, 40, 42, 44) de façon que lorsque l'une au moins des première et seconde unités d'éclairage se trouve dans la première position, sa surface exposée comporte une partie autre qu'une surface plate s'étendant soit complètement horizontalement soit complètement verticalement ;
• un moyen est prévu sur la partie de surface exposée de celle au moins des première et seconde unités d'éclairage et sur l'autre des première et seconde unités d'éclairage, pour fixer ces unités d'éclairage modulaires l'une à l'autre,
• des seconds moyens (30, 32) sont prévus sur la surface exposée de celle au moins des première et seconde unités d'éclairage modulaires, pour fixer une troisième de la pluralité des unités d'éclairage modulaires, sur celle au moins des première et seconde unités d'éclairage modulaires et ;
• des moyens supplémentaires, autres que celle au moins des première et seconde unités d'éclairage modulaires, sont prévus pour fixer la troisième unité d'éclairage modulaire à l'autre des première et seconde unités d'éclairage modulaires.

15. Unité d'éclairage modulaire selon la revendication 14, dans laquelle
l'un au moins de a) les moyens de fixation de la partie de surface exposée de la première unité d'éclairage modulaire à la seconde unité d'éclairage modulaire, et b) les seconds moyens de fixation, comprend un certain nombre de nervures et d'évidements en coopération.

16. Unité d'éclairage modulaire selon la revendication 14, comprenant des moyens pour fixer deux seulement des trois unités d'éclairage modulaires, à un support prévu pour celles-ci.

17. Unité d'éclairage modulaire selon la revendication 14, comprenant
une quatrième unité d'éclairage modulaire et des moyens prévus sur la quatrième unité d'éclairage modulaire pour fixer celle-ci à deux au moins des autres unités d'éclairage modulaire.
